# EUROPEAN PATENT APPLICATION

(11) **EP 2 677 429 A1**
(43) Date of publication of application: **25.12.2013**
(21) Application number: 12172461.1
(22) Date of filing: 18.06.2012
(51) Int. Cl.: G06F 11/10

(54) **Error correction**

(71) Applicant: Renesas Electronics Europe Limited, Bourne End, Buckinghamshire SL8 5FH (GB)
(72) Inventor: Hoffleit, Thorsten, 40472 Duesseldorf (DE); Mardmoeller, Christian, 40472 Duesseldorf (DE)
(74) Representative: Piotrowicz, Pawel Jan Andrzej

(57) **Abstract**

An ECC check result handling circuit (27) for manipulating a check result (14) generated by an ECC circuit (2) is described. The ECC check result handling circuit (27) is operable to receive an ECC check result generated by an ECC circuit and to output a configurable forced ECC check result instead of the ECC check result in response to an occurrence of a predefined condition.

## Description

The present invention relates to error correction.

Random access memory (RAM) is often provided with an error correction code (ECC) circuit. When data is written to the RAM, the ECC circuit generates an ECC based on the write data using an ECC polynomial. The data and the ECC are stored in memory. When data is read from memory, the integrity of the data is checked using the same ECC polynomial. ECC extraction and correction logic in the ECC circuit extracts and outputs the data. Depending on the complexity of the ECC polynomial used and the number of bits corrupted, the ECC extraction and correction logic can correct corrupted data.

The ECC circuit usually outputs data regardless of whether (i) it was unnecessary to correct the data, (ii) it was necessary to try to correct the data and the corrupted data was successfully corrected or (iii) it was necessary to try to correct the corrupted data, but it was not possible to correct the corrupted data successfully. The ECC circuit may output ECC status information such as read error address, correction attempt result, correction attempt counters, interrupts and other ECC-related status.

For many applications, it may be sufficient simply to test ECC circuit and related application software routines (running on a central processing unit) handling RAM read errors during development. However, RAM test modes or RAM content manipulation techniques can be used to correct RAM content which the ECC circuit reports as suffering a RAM read error. Development test software can be used to check whether the ECC-related software routines are operating correctly.

For safety-related applications, for example in automotive communication networks, such tests also are required during power-on sequence and during operation. Currently, however, such tests are difficult to perform *in-situ* without impacting on the operation of the system.

The present invention seeks to address this problem.

According to a first aspect of the present invention there is provided an ECC check result handling circuit for manipulating a check result generated by an ECC circuit. The ECC check result handling circuit is operable to receive an ECC check result generated by an ECC circuit and to output a configurable forced ECC check result instead of the ECC check result in response to an occurrence of a predefined condition.

Thus, the ECC check result handling circuit can allow ECC errors to be emulated during normal operation involving reading data from memory. In particular, error management software can configure the ECC check result handling circuit to output a predefined forced check result under predefined circumstances during normal operation and so check whether logic modules (e.g. peripheral modules in a microcontroller) and ECC-related software routines respond correctly without the need to suspend (or disrupt in some other way) normal operation of the memory, the ECC circuit, logic modules and/or the ECC-related software.

According to a second aspect of the present invention there is provided an ECC data handling circuit for manipulating ECC data output from memory, the ECC data comprising data and an ECC. The ECC data handling circuit is operable to receive ECC data and to output configurable forced ECC data instead of the ECC data in response to an occurrence of a predefined condition.

Thus, in a similar way to the ECC check result handling circuit, the ECC data handling circuit can allow ECC errors to be emulated during normal operation involving reading data from memory. Error management software can configure the ECC data handling circuit to output a predefined forced check result in predefined circumstances during normal operation and so check whether ECC-circuit, logic modules and ECC-related software routines respond correctly without the need to suspend (or disrupt in some other way) normal operation of the memory, the ECC circuit, logic modules or the ECC-related software.

The ECC data handling circuit may be operable to selectably invert at least one bit of the ECC data to produce the forced ECC data.

According to a third aspect of the present invention there is provided ECC circuit comprising the ECC data handling circuit and a data extraction circuit operable to receive ECC data or forced ECC data and to extract the data or corrected data from the ECC data or forced ECC data and to output the data or corrected data and, optionally, an ECC correction status (or "ECC check status").

The circuit may include a trigger circuit for generating a trigger in response to the occurrence of the predefined condition.

The predefined condition may include a predefined address in memory being accessed. The predefined condition may include memory being accessed a predefined number of times or being accessed a randomly selected number of times. The predefined condition may include read data generated by the ECC circuit matching predefined read data.

The circuit may be operable to output a further forced check result or further forced ECC data in response to a further occurrence of the predefined condition. The circuit may be selectively operable in first and second modes. In the first mode, the circuit does not output another forced check result or further forced ECC data in response to a further occurrence of the predefined condition unless it is externally reset or re-configured, i.e. the circuit is in single-shot mode. In the second mode, the circuit outputs another forced check result or further forced ECC data in response to a further occurrence of the predefined condition without being externally reset or re-configured, i.e. the circuit is in repeated (or "continuous") mode.

According to a fourth aspect of the present invention there is provided a microcontroller comprising at least one central processing unit and an ECC check result handling circuit and/or an ECC data handling circuit.

The microcontroller may further comprise a peripheral module and the ECC check result handling circuit may be configured to provide the ECC check result or forced ECC check result to the peripheral module and, optionally, a central processing unit. The ECC check result handling circuit may be configured to provide an ECC check status to the peripheral module and/or the at least one central processing unit. The peripheral module may be a communications network controller module, such as a FlexRay (RTM) communications network controller module.

The microcontroller may further comprise random access memory.

The at least one central processing unit may be configured to provide configuration data to the ECC check result handling circuit and/or ECC data handling circuit for setting the predefined condition and, optionally, to receive the ECC check result and/or an ECC check status from the circuit.

According to a fifth aspect of the present invention there is provided a method of manipulating a check result generated by an ECC circuit. The method comprises receiving an ECC check result generated by an ECC circuit and outputting a forced ECC check result instead of the ECC check result in response to an occurrence of a predefined condition.

According to a sixth aspect of the present invention there is provided a method of manipulating an ECC read data. The method comprises receiving ECC data comprising data and an ECC and outputting forced ECC data instead of the ECC data in response to an occurrence of a predefined condition.

Certain embodiments of the present invention will now be described, by way of example, with reference to the accompanying drawings, in which:
Figure 1 is a schematic block diagram of a RAM module and an ECC module;
Figure 2 is a schematic block diagram of a microcontroller which includes an ECC check result manipulation circuit, and an external RAM module and an external ECC circuit;
Figure 3 is a schematic block diagram of the ECC check result manipulation circuit shown in Figure 2;
Figure 4 is a flow diagram illustrating a process of manipulating a check result generated by an ECC circuit;
Figure 5 is a schematic block diagram of a microcontroller which includes an internal RAM module and an ECC circuit which includes an ECC read data manipulation circuit;
Figure 6 is a schematic block diagram of the ECC read data manipulation circuit shown in Figure 5; and
Figure 7 is a flow diagram illustrating a process of manipulating a ECC read data.

In the following description, like parts are denoted by like reference numerals.

### RAM and ECC modules

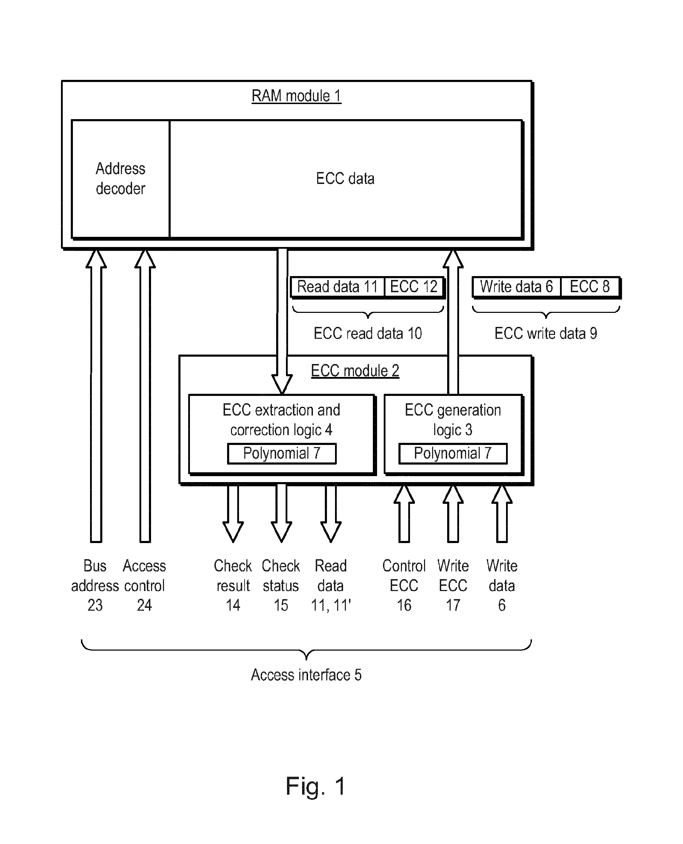

Referring to Figure 1, error correction codes (ECCs) can be used to detect and correct errors when reading and writing to and from to a RAM module 1 (herein also referred to simply as "RAM"). An error correction code (ECC) module 2 (herein also referred to as "ECC logic" and "ECC circuit") can be used to detect and correct bit errors. The ECC module 2 is implemented in hardware. The number of bit errors which can be corrected is usually less than the number of bit errors that can be detected. Typically, a 7-bit ECC is sufficient to protect a 32-bit data word. However, a longer or shorter ECC can be used. In addition to detecting and correcting errors and outputting read data, the ECC module 2 can also output status information about a current read access, for example, indicating successful read, read with corrected errors, or invalid read.

The ECC module 2 is generally divided into two sections 3, 4, namely an ECC generation logic 3 and an ECC extraction and correction logic 4. The ECC logic sections 3, 4 are controlled through a bus system (or "access interface") 5 including data, address and control buses.

The ECC generation logic section 3 receives data 6 from, for example, a peripheral module (not shown) to be written into RAM 1. Herein, such data is referred to as "write data".

Using an ECC polynomial 7, the ECC generation logic 3 generates an ECC 8 and outputs ECC write data 9 comprising the write data 6 and the ECC 8. The ECC write data 9 is transmitted via a write path (not shown) and stored in RAM 1.

The ECC extraction and correction logic 4 retrieves ECC read data 10 which includes data 11 (herein referred to as "read data") and an ECC 12 from the RAM module 1. The ECC extraction and correction logic 4 uses the same ECC polynomial 7 to extract and output read data 11 and to output a check result 14 to the access interface 5. If necessary, the ECC extraction and correction logic 4 may correct corrupted read data 11 and output corrected read data 11'.

The check result 14 indicates whether (i) it was unnecessary to correct the data ("not necessary to correct"), (ii) it was necessary to try to correct the data and the corrupted data was successfully corrected (which may be simply referred to as "successively corrected") or (iii) it was necessary to try to correct the corrupted data, but it was not possible to correct the corrupted data successfully (which may be simply referred to as "not successively corrected" or "not possible to correct").

The ECC extraction and correction logic 4 may also output check status 15 (herein also referred to as "read result status" or "correction status"). The check status 15 may include (i) an error address, (ii) error counter(s), (iii) error interrupt(s) and/or (iv) ECC read data.

The ECC module 2 can help to protect against permanent and transient faults in the RAM module 1.

In a microcontroller, a central processing unit can execute application software modules to read data from the RAM module 1. It is generally desirable for these application software modules to react appropriately to 'successfully corrected' and 'not successfully corrected' read attempts. To test these application software modules during development, the ECC read result 14 can be forced.

The RAM module 1 may be located inside or outside the microcontroller. When the RAM module 1 is located externally, the microcontroller accesses the RAM module 1 through an external data and address bus system of the microcontroller. The ECC circuit 2 may be part of the external RAM module 1 or integrated into the microcontroller.

If the RAM module 1 and ECC module 2 are implemented outside the microcontroller, then control over testing of the ECC extraction and correction logic 4 and, thus, RAM content manipulation are not possible unless an additional access interface to the ECC module 2 is provided.

If RAM and ECC modules 1, 2 are implemented inside the microcontroller, mechanisms are available which allow the ECC generation circuit 3 to be bypassed and manipulate the content of the RAM module 1. RAM content can be manipulated in such way to cause the ECC circuit 2 to output a 'successfully corrected' or 'not successfully corrected' read attempt. To achieve this, the ECC circuit 2 includes interfaces for ECC control 16 and write ECC 17 that can be accessed by a central processing unit and/or peripheral modules. This bypass function is available for functional testing of the ECC generation circuit 3. Functional testing can be performed during normal operation without influencing the operation of the peripheral module.

RAM content manipulation to control the ECC check result 14 and ECC extraction and generation logic 4 by the central processing unit is difficult to perform while running the application software without influencing the application software process. Particularly in applications that require real-time behaviour, the time slots available to manipulate RAM content are relative short. A time slot may be limited by a communication interface of a communications protocol such as control area network (CAN), FlexRay or Ethernet. For example, data retention time of a message in FlexRay message RAM is limited by data update rate which is usually the time of a FlexRay communication cycle, which is currently about 5 ms. However, data retention time in temporary storage RAM can be less than 1 µs. It may also be necessary to test that error detection mechanisms are operating correctly during the power on sequence and/ or during normal operation time. However, setting ECC circuit 2 outputs so as to manipulate ECC data and test the application software is difficult to control without influencing the application software process.

Certain aspects of the present invention seek to allow the ECC result to be controlled while running the application software without influencing normal operation of embedded RAM modules and external RAM and ECC modules. Thus, ECC-related software modules can be easily tested. Other aspects of the present invention seek to simplify functional testing of the ECC logic and the related logic core.

### Manipulation of ECC check result for an external RAM module

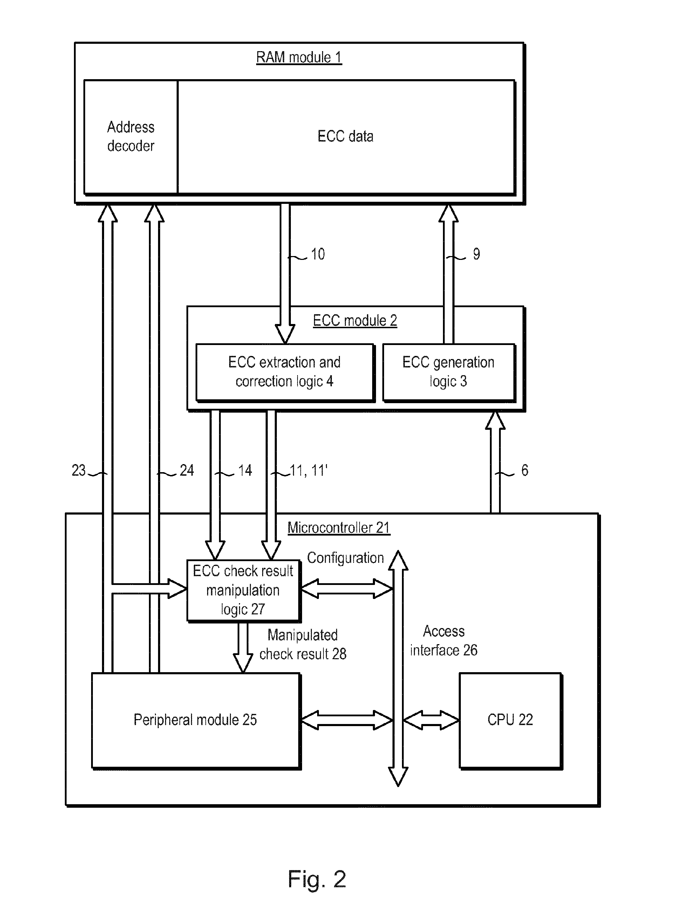

Figure 2 illustrates an embodiment in which the RAM and ECC modules 1, 2 are located outside a microcontroller 21.

As shown in Figure 2, the microcontroller 21 includes a central processing unit 22. Without increasing interconnection overhead outside the microcontroller 21, the central processing unit 22 has no direct access to the ECC module 2.

The microcontroller 21 is connected to the RAM module 1 using certain parts ("relevant parts") of the external data and address bus system 5. The relevant parts of the interface 5 (Figure 1) include an address bus 23, access control signals 24, read data 11, 11', write data 6 and ECC check result 14. Other parts of the interface 5 (Figure 1), such as check status 15 (Figure 1), control ECC 16 (Figure 1) and write ECC 17 (Figure 1), are optional and need not be used. Internally, the relevant parts of the interface may be connected to a peripheral module 25 or to the microcontroller's internal bus system 26, i.e. the RAM module 1 is treated as extended memory. The peripheral module 25 may be a FlexRay (RTM) communications network controller module.

Control over the ECC check result 14 can be provided or enhanced by an ECC check result manipulation logic 27 (also referred to herein as "ECC check result manipulation circuit" and "ECC check result handling circuit") placed in the path of the ECC check result 14 between the ECC module 2 and the peripheral module 25. The ECC check result manipulation logic 27 is implemented in hardware. The ECC check result manipulation logic 27 can be accessed by the central processing unit 22 through the microcontroller's internal bus system 26 to configure and control the ECC check result manipulation logic 27. The ECC check result manipulation logic 27 can pass a manipulated check result 28 to the peripheral module 25 instead of the ECC check result 14.

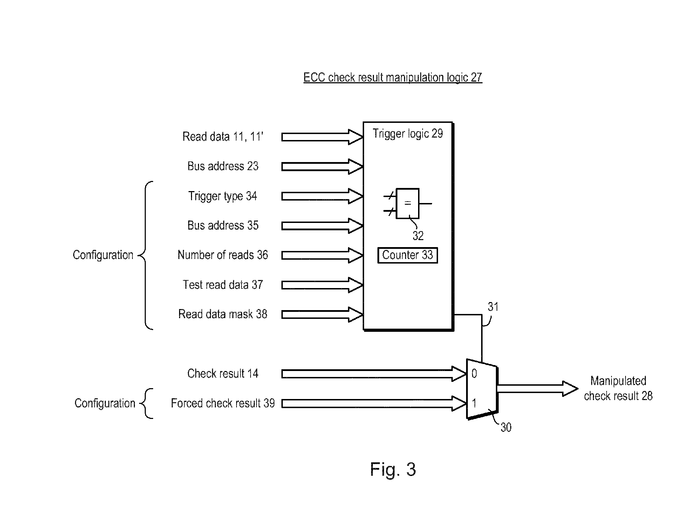

Figure 3 shows the ECC check result manipulation logic 27 in more detail.

The ECC check result manipulation logic 27 includes trigger logic 29 and a multiplexer 30. The trigger logic 29 is arranged to provide a trigger 31 to the multiplexer 30. The trigger logic 29 includes a comparator 32 and a counter 33.

In the ECC check result manipulation circuit 27, the check result 14 is assigned to the manipulated check result 28 by default. Only when an ECC manipulation trigger condition matches a configuration 34, 35, 36, 37, 38 is a forced check result 39 assigned to the manipulated check result 28. The forced check result 39 can be configured to be 'not necessary to correct', 'corrected successfully' or 'not possible to correct'.

One or more trigger conditions may be configured such that, when the condition occurs, the check result 14 to be overwritten by the configured result 39:

### -Address match trigger-

ECC check result manipulation may be triggered when a configured address 35 is accessed for reading data from RAM 1. The address 23 applied to the RAM module 1 is compared against the configured address 35 to determine whether there is a match. The ECC check result manipulation circuit 27 may be configured for 'single shot' or 'continuous' trigger mode operation. Depending on the trigger mode, the result 14 is manipulated only once (single shot mode) or every time the configured address matches (continuous mode).

### -Access count trigger-

ECC result manipulation may be triggered after a configured number 36 of read accesses to RAM 1. The number of read accesses to the RAM is counted using counter 32 and compared against the configured number 36 to determine whether there is a match. The ECC check result manipulation circuit 27 may be configured for 'single shot' or 'continuous' trigger mode operation. When the configured number of accesses is reached, depending on the trigger mode the counter 32 is restarted (continuous mode) or stopped (single shot mode).

### -Random trigger-

ECC result manipulation may be triggered after a randomly-generated number of read accesses to RAM 1. The randomly-generated number may be generated by trigger logic 29 or a separate logic circuit (not shown). The ECC check result manipulation circuit 27 may be configured for 'single shot' or 'continuous' trigger mode. After a random number of accesses the trigger 31 is released. Depending on the trigger mode the counter is restarted (continuous mode) or stopped (single shot mode) and a new random number is generated.

### -Content trigger-

ECC result manipulation may be triggered when the read data 11 or corrected read data 11' matches a configured value 37. Additionally, bits in the read data 11,11' may be masked as 'don't care'. For this, the read data 11, 11' is compared against the configured read data 37 and mask data 38. The ECC check result manipulation circuit 27 may be configured for 'single shot' or 'continuous' trigger mode. Depending on the trigger mode the result is manipulated only once (single shot mode) or every time the configured data content matches (continuous mode).

Several trigger conditions can be configured to cause the check result 14 to be overwritten by the configured result 39. Additional trigger modes to those listed above may be implemented if required or the same trigger condition can be implemented several times with individual configuration parameters. Different trigger conditions may be implemented in parallel and the individual trigger signals may be combined by a logical AND or logical OR. For example, an address match trigger may be combined with a content trigger to generate a trigger event signal 31 when a specific address is read and the read data has a specific value.

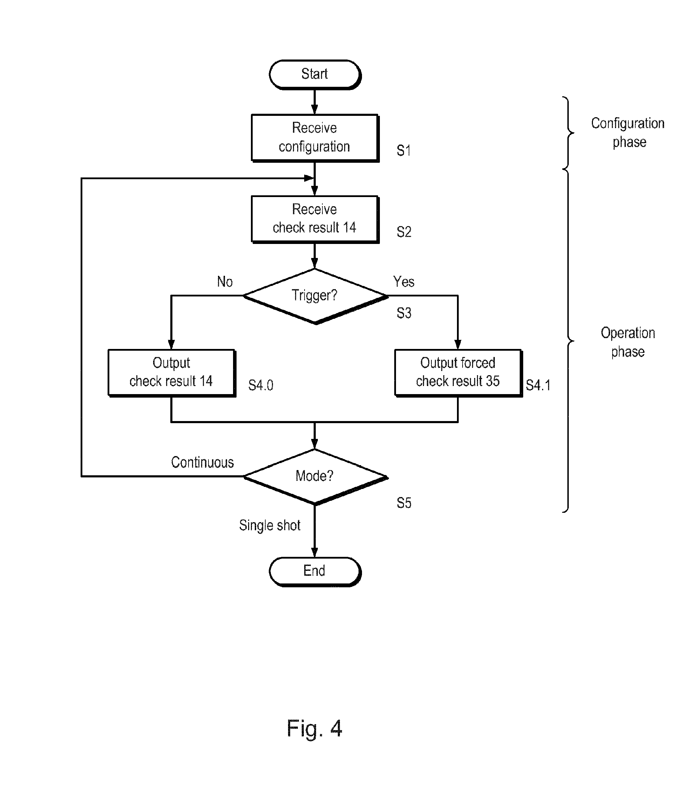

Figure 4 illustrates operation of the ECC check result manipulation logic 27.

Referring to Figures 2, 3 and 4, when operations begin, for example during a power on sequence, the ECC check result manipulation circuit 27 is configured by the CPU 22 (step S1). In some examples, the ECC check result manipulation circuit 27 can be configured more than once. For example, the circuit 27 may be re-configured in response to detecting a fault.

The peripheral module 25 exchanges data with application software (not shown) running on the central processing unit 22. The peripheral module 25 uses the external RAM 1 to store data.

When data is read from the RAM module 1, the ECC circuit 2 extracts the read data 11 from ECC read data 10 and, if necessary, corrects the read data.

The ECC extraction and correction logic 4 outputs the read data 11 or corrected read data 11' to the peripheral module 25 and the check result 14 to the ECC check result manipulation logic 27. The ECC check result manipulation logic 27 outputs a manipulated check result 28 to the peripheral module 25.

If a condition for generating a trigger has not occurred, the ECC check result manipulation logic 27 passes the check result 14 to the peripheral module 25 as the manipulated check result 28 (step S3 & S4.0). However, if a condition for generating a trigger has occurred, the ECC check result manipulation logic 27 provides the forced check result 39 to the peripheral module 25 (step S3 & S4.1). Depending on the operation mode (step S5), the ECC check result manipulation logic 27 may continue manipulating further check result(s) (step S2) or stop.

A (supervisory) error management software module (not shown) can monitor operation of the peripheral module 25 and error-handling modules of the application software (not shown) by emulating errors.

A trigger condition is an instance when an error is emulated.

Usually, if the peripheral module 25 is informed of a 'corrected successfully' or 'not possible to correct' read attempt, it should report the occurrence of an error to the application software (not shown) which in turn can take appropriate action, such as reading status registers (not shown) in the peripheral module 25 to identify the cause of the error. However, if there is a fault in the peripheral module 25 or the application software (not shown), then the error may not be reported or may not be acted upon despite the ECC module 2 having flagged the error.

If the error management software module knows of an artificial error, it can determine whether the hardware, in particular the peripheral module 25, and application software (not shown) have responded correctly. If the peripheral module 25 or application software (not shown) have not responded correctly, then the error management software module can take action, for example, by shutting down the module and restarting.

### Manipulation of ECC read data for an internal RAM module

In the embodiment shown in Figure 2 which includes an external RAM module, the ECC check result manipulation circuit 27 can be used to provide control over a "check result path", that is, over hardware (i.e. logic and interfaces) including the peripheral module 25 and software.

However, if an ECC check result manipulation circuit were included a microcontroller having embedded RAM and ECC modules, the circuit would not provide control over the ECC extraction and correction logic and other interfaces usually included in the embedded ECC module. These additional outputs include, for example, error address, correction attempt counters and interrupt signals.

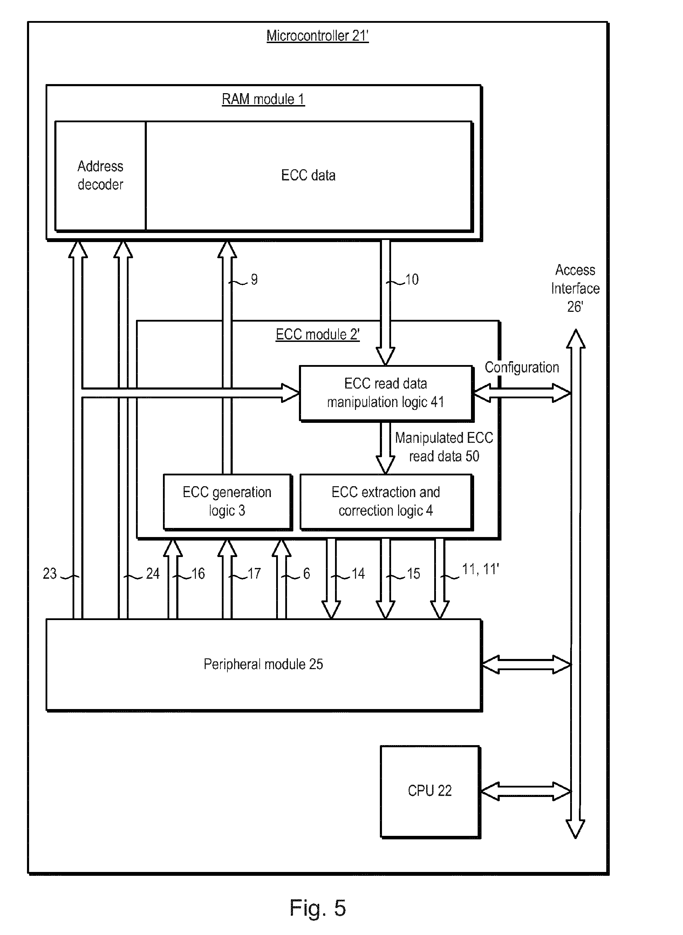

Figure 5 illustrates an embodiment in which the RAM and ECC modules 1, 2' are embedded in inside a microcontroller 21'. The microcontroller 21 includes a central processing unit 22.

A high level of control over the ECC extraction and correction logic 4 can be achieved if the ECC read data 10 is directly manipulated by ECC read data manipulation logic 41 placed in the read data path between the RAM module 1 and the ECC extraction and correction logic 4. The ECC read data manipulation logic 41 can be included in the ECC module 2' or provided as a separate module (not shown) between RAM and ECC modules 1, 2. The ECC read data manipulation logic 41 is implemented in hardware.

The ECC read data manipulation logic 41 can be accessed by central processing unit 22 through the microcontroller's internal bus system 26' to configure and control the ECC read data manipulation logic 41.

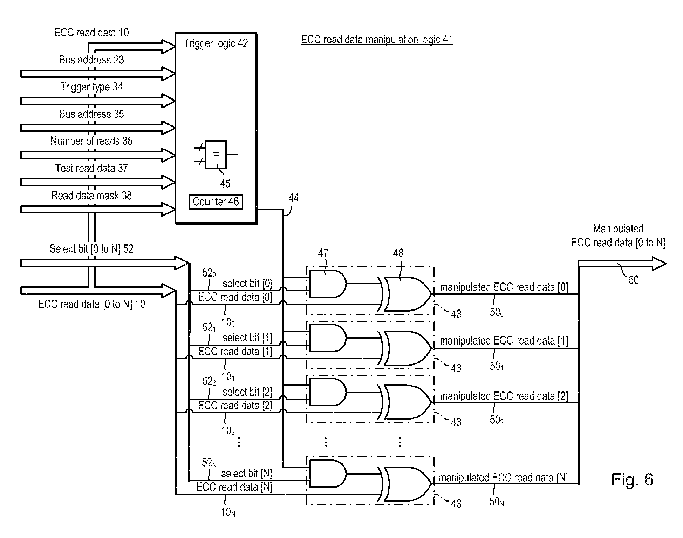

Figure 6 shows the ECC read data manipulation logic 41 in more detail.

The ECC check result manipulation logic 41 includes trigger logic 42 and a set of bit-inverting logic circuits 43 for inverting selected bits in ECC read data 10. The trigger logic 42 is arranged to provide a trigger 44 to the logic circuits 43. The trigger logic 42 includes a comparator 45 and a counter 46. The bit-inventing logic circuits 43 may comprise an AND gate 47 and an XOR gate 48.

In the ECC read data manipulation logic 41, the ECC read data 10 is assigned to manipulated ECC read data 50 by default. Only when the ECC manipulation trigger condition matches a configuration 34, 35, 36, 37, 38, 39 is the ECC read data 10 manipulated depending on a select bit configuration value 52.

The select bit value 52₀, 52₁, 52₂,..., 52_{N} can be configured in such way that each bit 10₀, 10₁, 10₂,..., 10_{N} in the ECC read data 10 can be selected independently. As shown in Figure 6, the trigger 44 and a corresponding select bit 52₀, 52₁, 52₂,..., 52_{N} is provided to AND gate 47. The output of the AND gate 47 and the ECC data bit 10₀, 10₁, 10₂,..., 10_{N} are supplied to the XOR gate 48. More than one ECC read data bit 10₀, 10₁, 10₂,..., 10_{N} can be selected at the same time. As shown in Figure 6, each bit 52₀, 52₁, 52₂,..., 52_{N} in the vector of select bit 52 corresponds to one bit 10₀, 10₁, 10₂,..., 10_{N} in the ECC read data 10.

The trigger conditions can be the same as those described earlier.

When a condition matches the trigger condition 34, 35, 36, 37, 38, 39 and a bit 10₀, 10₁, 10₂,..., 10_{N} is selected to be manipulated, the ECC read data 10₀, 10₁, 10₂,..., 10_{N} for this bit is inverted when assigned to the manipulated ECC read data 50. When a bit 10₀, 10₁, 10₂,..., 10_{N} is not selected for manipulation, the ECC read data 10₀, 10₁, 10₂,..., 10_{N} is assigned unchanged to the manipulated ECC read data 50. When the trigger condition does not match, all bits 10₀, 10₁, 10₂,..., 10_{N} in the ECC read data 10 are assigned unchanged to the manipulated ECC read data 50.

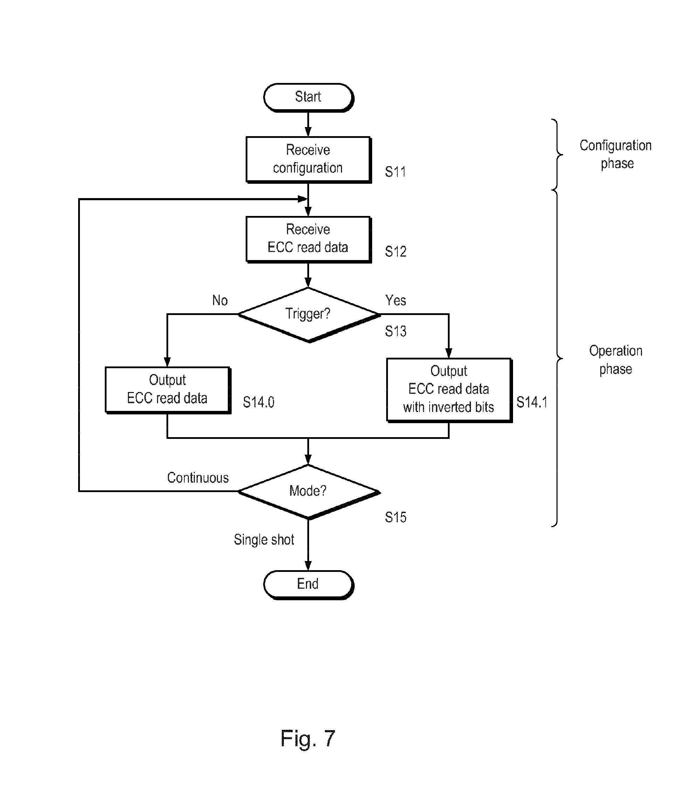

Figure 7 illustrates operation of the ECC read data manipulation logic 41.

Referring to Figures 2, 6 and 7, when operations begin, for example during a power on sequence, the ECC read data manipulation logic 41 is configured by the central processing unit 22 (step S11). In some examples, the ECC read data manipulation logic 41 can be configured more than once. For example, the circuit 41 may be re-configured in response to detecting a fault.

The peripheral module 25 exchanges data with application software (not shown) running on the central processing unit 22. The peripheral module 25 uses the external RAM 1 to store data.

When data is read from the RAM module 1, the ECC circuit 2' extracts the ECC read data.

The ECC read data manipulation logic 41 outputs a manipulated ECC read data 50 to the ECC extraction and correction logic 4.

If a condition for generating a trigger has not occurred, the ECC read data manipulation logic 41 passes the ECC read data 10 the ECC extraction and correction logic 4 as the manipulated ECC read data 50 (step S13 & S14.0). However, if a condition for generating a trigger has occurred, the ECC read data manipulation logic 41 provides ECC read data with selected inverted bits (step S13 & S14.1). Depending on the operation mode (step S15), the ECC read data manipulation logic 41 may continue manipulating further check result(s) (step S12) or stop.

The ECC extraction and correction logic 4 outputs the read data 11 or corrected read data 11' and check result 14 to the peripheral module 25.

An error management software module (not shown) which play a supervisory role can monitor operation of the ECC extraction and correction logic 4, the peripheral module 25 and error-handling modules of the application software (not shown) by emulating errors in a similar to that described earlier. However, unlike the arrangement described earlier, the central processing unit 22 has full control over ECC extraction and correction logic 4 during normal operation without influencing the normal operation and changing the RAM content. Having control over each bit 10₀, 10₁, 10₂,..., 10_{N} allows the central processing unit 22 to have full test coverage for the ECC extraction and correction logic 4.

The number of bits that the central processing unit 22 can manipulate can be varied. The number of bits needed to be manipulated in order to identify a fault depends on the required level of testing and the ECC polynomial 7 (Figure 1) used. For example, when the ECC polynomial 7 (Figure 1) is capable of correcting up to E bits, then the application (not shown) needs to be able to configure the ECC read data manipulation logic 41 to manipulate (E+1) bits to enforce a 'not possible to correct' result. If it is necessary to enforce both 'corrected successfully' and 'not possible to correct' results, the application (not shown) needs to be able to configure the ECC read data manipulation logic 41 to manipulate E or (E+1) bits.

Reducing the number of bit which can be manipulated reduces the hardware required, but also reduces test coverage.

Implementing the ECC check result manipulation logic and /or ECC read data manipulation logic to control the result(s) of error correction can simplify testing of the ECC check result, ECC check status and related software module. These allow logic tests to be performed during normal operation. One of the advantages is that no real RAM content changes need be performed and to hit the correct timing that the manipulated RAM content generates the required effect.

It will be appreciated that many modifications may be made to the embodiments hereinbefore described.

For example, an ECC check result manipulation circuit may be included in microcontroller which includes embedded RAM and ECC modules.

The ECC check result manipulation circuit and/or ECC data handling circuit need not be used with a peripheral module. The circuits(s) can be used with CPU system RAM. The circuits(s) can be used with coder/decoder logic, e.g. audio decoders and video decoders.

## Claims

1. An ECC check result handling circuit for manipulating a check result generated by an ECC circuit, the ECC check result handling circuit operable to receive an ECC check result generated by an ECC circuit and to output a configurable forced ECC check result instead of the ECC check result in response to an occurrence of a predefined condition.

2. An ECC data handling circuit for manipulating ECC data output from memory, the ECC data comprising data and an ECC, the ECC data handling circuit operable to receive the ECC data and to output configurable forced ECC data instead of the ECC data to in response to an occurrence of a predefined condition.

3. An circuit according to claim 2, which is operable to selectably invert at least one bit of the ECC data to produce forced ECC data.

4. An ECC circuit comprising:
an ECC data handling circuit according to claim 2 to 3; and
a data extraction circuit operable to receive ECC data or forced ECC data and to extract the data or corrected data from the ECC data or forced ECC data and to output the data or corrected data and, optionally, an ECC correction status.

5. A circuit according to any preceding claim, wherein the circuit includes:
a trigger circuit for generating a trigger in response to the occurrence of the predefined condition.

6. A circuit according to any preceding claim, wherein the predefined condition includes a predefined address in memory being accessed.

7. A circuit according to any one of claims 1 to 6, wherein the predefined condition includes memory being accessed a predefined number of times.

8. A circuit according to any one of claims 1 to 6, wherein the predefined condition includes memory being accessed a randomly selected number of times.

9. A circuit according to any preceding claim, wherein the predefined condition includes read data generated by the ECC circuit matching predefined read data.

10. A circuit according to any preceding claim, wherein the circuit is operable to output a further forced check result or further forced ECC data in response to a further occurrence of the predefined condition.

11. A microcontroller comprising:
at least one central processing unit; and
a circuit according to any preceding claim.

12. A microcontroller according to claim 11 when dependent on claim 1, further comprising:
a peripheral module;
wherein the ECC check result handling circuit is configured to provide the ECC check result or forced ECC check result to the peripheral module, and optionally to provide an ECC check status to the peripheral module and/or the at least one central processing unit.

13. A microcontroller according to claim 11 or 12, wherein the at least one central processing unit is configured to provide configuration data to the circuit for setting the predefined condition and/or to receive an ECC correction status from the circuit.

14. A method of manipulating a check result generated by an ECC circuit, the method comprising:
receiving an ECC check result generated by an ECC circuit;
outputting a configurable forced ECC check result instead of the ECC check result in response to an occurrence of a predefined condition.

15. A method of manipulating a ECC read data, the method comprising:
receiving ECC data comprising data and an ECC;
outputting configurable forced ECC data instead of the ECC data in response to an occurrence of a predefined condition.
